# EUROPEAN PATENT APPLICATION

(11) **EP 2 317 217 A2**
(43) Date of publication of application: **04.05.2011**
(21) Application number: 10188091.2
(22) Date of filing: 19.10.2010
(51) Int. Cl.: F21V 14/08, F21S 8/12

(54) **Vehicle headlamp**

(30) Priority: 21.10.2009 JP 2009242424
(71) Applicant: Koito Manufacturing Co., Ltd., Tokyo 108-8711 (JP)
(72) Inventor: Mochizuki, Mitsuyuki, Shizuoka-shi, Shizuoka (JP)
(74) Representative: Intès, Didier Gérard André

(57) **Abstract**

A vehicle headlamp (10) is provided with: a first shade member (28) having an upper end edge (28al, 28a2) for forming a horizontal cut-off line; a second shade member (38) having a side end edge (38b) for forming a vertical cut-off line; a first actuator for moving the first shade member (28) between a light shielding position and a light shield releasing position; and a second actuator (40) for moving the second shade member (38) in a right-left direction.

## Description

### BACKGROUND OF THE INVENTION

### <FIELD OF THE INVENTION>

The present invention relates to a vehicle headlamp having so-called projection type lamp units, more particularly, to a vehicle headlamp configured so that the lamp units thereof selectively form a high-beam light distribution pattern and a low-beam light distribution pattern.

### <RELATED ART>

Conventionally, there is known a vehicle headlamp equipped with a lamp unit configured so as to selectively form a high-beam light distribution pattern and a low-beam light distribution pattern.

In such a vehicle headlamp, in the case that the lamp unit thereof is a projection lamp unit, such a configuration as that described in JP-A-2002-056708 is adopted.

The lamp unit is equipped with a projection lens disposed on an optical axis of the lamp extending in a front-rear direction of a vehicle; a light source disposed behind a rear focal point of the projection lens; a reflector for reflecting light from this light source to the projection lens; and a shade for shielding a part of the reflected light from the reflector in a vicinity of a rear focal plane of the projection lens. As the shade, a movable shade is used. The movable shade is movable between a light shielding position at which an upper end edge of the shade is disposed so as to pass through the vicinity of the rear focal point of the projection lens and a light shield releasing positions at which a shielding of the reflected light by the shade is released.

Although the low-beam light distribution and the high-beam light distribution pattern can be selectively formed by adopting the lamp unit having the movable shade as that in JP-A-2002-056708, there is a problem that more versatile light distribution patterns cannot be selectively formed.

### SUMMARY OF THE INVENTION

One or more embodiments of the invention provide a vehicle headlamp which can selectively form light distribution patterns that are intermediate between a low-beam light distribution pattern and a high-beam light distribution pattern.

In accordance with one or more embodiments of the invention, a vehicle headlamp is provided with: a first shade member having an upper end edge with a right section and a left section which are different in height; and a second shade member having a side end edge and an upper end edge. The first shade member and the second shade member are movable.

Specifically, the vehicle headlamp of the one or more embodiments is provided with: a projection lens to be disposed on an optical axis extending along a front-rear direction of a vehicle; a light source disposed in a rear side of a rear focal point of the projection lens; a reflector for reflecting light from the light source toward the projection lens; a shade for shielding a part of the reflected light from the reflector and which is disposed in a vicinity of a rear focal plane of the projection lens, wherein the shade includes: a first shade member having an upper end edge for forming a horizontal cut-off line in a light distribution pattern; and a second shade member having a side end edge for forming a vertical cut-off line in the light distribution pattern and an upper end edge for forming an upward cut-off line extending in an approximately horizontal direction from a lower end portion of the vertical cut-off line; a first actuator for moving the first shade member between a light shielding position at which the first shade member is disposed so that the upper end edge passes through a position in the vicinity of the rear focal point and a light shield releasing (or canceling) position at which a of the by the first shade member is released (or cancelled); and a second actuator for moving the second shade member in a right-left direction.

A specific mode for moving the "first shade member" between its light shielding position and its light shield releasing position is not particularly limited. Furthermore, a specific position serving as the "light shield releasing position" is not particularly limited, either.

The vertical cut-off line formed by the "side end edge" of the second shade member may be a cut-off line directed to the road shoulder side or may be a cut-off line directed to the opposite road side.

The upward cut-off line formed by the "upper end edge" of the second shade member may be a cut-off line extending straight in the horizontal direction or may be a cut-off line having some unevenness, provided that the cut-off line extends from the lower end portion of the vertical cut-off line in an approximately horizontal direction. Furthermore, a specific position at which the cut-off line is formed in the height direction thereof is not particularly limited.

According to the above structure, the high-beam light distribution pattern can be formed by moving the first shade member to its light shield releasing position and by moving the second shade member to a position at which the reflected light from the reflector is not shielded by the second shade member.

On the other hand, the low-beam light distribution pattern having the horizontal cut-off line with right and left parts which are different in height can be formed by moving the first shade member to its light shielding position. At the time, the movement position of the second shade member may be a given position, provided that the position is within a range in which the light reflected from the reflector and shielded by the first shade member located at its shielding position is not shielded more than necessary.

Furthermore, light distribution patterns being intermediate between the low-beam light distribution and the high-beam light distribution pattern and having the cut-off line and the cut-off line can be by moving the first shade member to its light shield releasing and by moving the second shade member to a position at which of the reflected light the reflector is buy the second shade member.

At the time, the position at which the vertical cut-off lines are formed can be set at given positions in the right-left direction depending on the position of the second shade member in the intermediate light distribution patterns. Hence, the visibility of the area or the subject vehicle can be obtained securely and sufficiently without giving glare to the driver of an oncoming vehicle or the driver of a preceding vehicle by properly setting the positions at which the vertical cut-off lines are formed depending on vehicle traveling circumstances.

In the above-mentioned structure, the upper end edge of the second shade member may be formed so as to extend in the horizontal direction at approximately the same height as the lower level section of the upper end edge of the first shade member that is located at its light shielding position. According to this configuration, the following working effects can be obtained. That is, a light distribution pattern having only an upward cut-off line can be formed by moving the second shade member, from a state in which an intermediate light distribution pattern is formed to a position at which no vertical cut-off line is formed, in the opposite direction of the movement direction that is taken when the high-beam light distribution pattern is formed. At the time, the upward cut-off line in the light distribution pattern is formed on approximately the same height as the horizontal cut-off line section on the lower level side in the horizontal cut-off line with the right and left sections which are different in height in the low-beam light distribution pattern. Hence, in the case that the traffic system of a vehicle traveling road is changed from left-hand traffic to right-hand traffic (for example, in the case of passing through the Dover Channel), it is not to give glare to the driver of an oncoming vehicle.

Alternatively, in the above-mentioned structure, a or the upper end or the second shade member are formed so as to be approximately bilaterally symmetric with a or the upper end of the first shade that is located at its light shielding position. According to this configuration, the following working effects can be obtained. That is, a light distribution pattern including horizontal cut-off line having a shape which is bilaterally symmetric with a shape of the cut-off line in the low-beam light distribution pattern can be formed by moving the second shade member from a state in which an intermediate light distribution pattern is formed to a position at which no vertical cut-off line is formed in an opposite direction of a movement direction that is taken when the high-beam light distribution pattern is formed. Hence, even in the case that the traffic system of a vehicle traveling road is changed from left-hand traffic to right-hand traffic, light can be irradiated according to a light distribution pattern having a shape approximately similar to the oaf the low-beam light distribution pattern corresponding to the traffic system. As a result, the visibility of the area ahead of the subject vehicle can be obtained securely without giving glare to the driver of an oncoming vehicle.

In the above-mentioned structure, in the case that a pair of lamp units is provided, the second shade member of one of the lamp units may be configured so that the side end edge thereof forms a vertical cut-off line directed to the road shoulder side, and the second shade member of the other of lamp units may be configured so that the side end edge thereof forms a vertical cut-off line directed to the opposite road side. According to this configuration, it is possible to form a pair of intermediate light distribution patterns in which the directions of the vertical cut-off lines are different from each other. Hence, the vertical cut-off lines can be positioned on both the right and left sides of an oncoming vehicle or a preceding vehicle by properly setting the positions of the vertical cut-off lines in the pair of the intermediate light distribution patterns. As a result, the visibility of the area ahead of the subject vehicle can be obtained securely and sufficiently without giving glare to the driver of the oncoming vehicle or the driver of the preceding vehicle.

### BRIEF DESCRIPTION OF THE DRAWINGS

FIG. 1 is a front view showing a vehicle according to an exemplary embodiment of the Invention;
FIG. 2 is a front view showing a detailed configuration of one of the lamp units in the vehicle of FIG 1 ;
FIG. 3 is a sectional view own line III-III of FIG. 2;
FIGS. 4A to 4F are perspective views showing several types of light distribution patterns formed on an imaginary vertical screen at a position 25 m in front of the lamp units by the light irradiated forward from the vehicle headlamp of Fig 1;
FIGS. 5A and 5B are views showing the intermediate light distribution patterns shown in FIGS. 4C and 4D in more detail;
FIG. 6 is a view showing a first modified example, approximately similar to FIG. 1;
FIGS. 7A to 7F are views showing the light distribution patterns of the first modified example, approximately similar to FIGS. 4A to 4F;
FIG. 8 is a view showing a second modified example, approximately similar to FIG. 1; and
FIGS. 9A to 9F are views showing the light distribution patterns of the second modified example, approximately similar to FIGS. 4A to 4F.

### DETAILED DESCRIPTION OF THE EXEMPLARY EMBODIMENTS

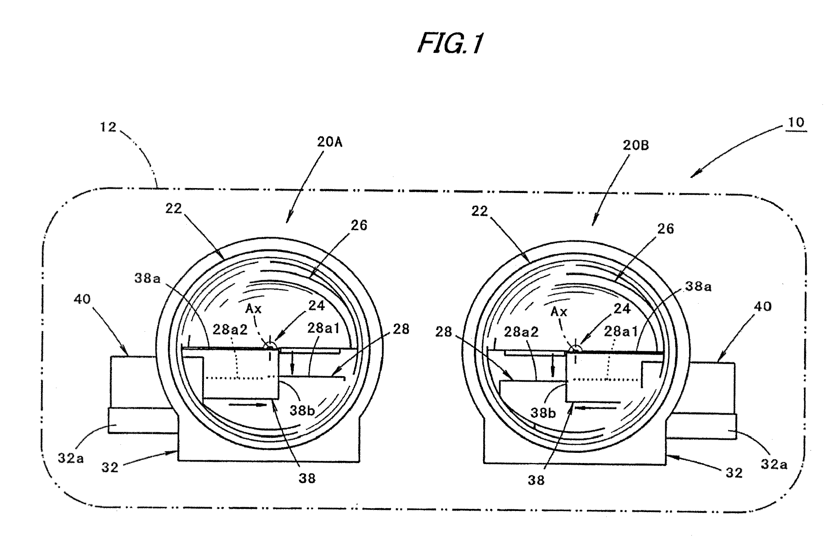

FIG. 1 is a front view showing a vehicle headlamp 10 according to an exemplary embodiment of the invention. As shown in Fig. 1, the vehicle headlamp 10 has a configuration in which a pair of projector lamp units 20A and 20B is built in a lamp body 12 having an outer shape indicated by a two-dot chain line in the figure so that aiming adjustment can be performed.

Each of the pair of lamp units 20A and 20B is configured so as to be able to selectively carry out light irradiation for forming a low-beam light distribution pattern for left-side light distribution, light irradiation for forming a high-beam light distribution pattern and light irradiation for forming a light distribution pattern intermediate therebetween.

Since the lamp units 20A and 20B used as a pair are similar to each other in configuration, one of the lamp units, the lamp unit 20A, is described first, and then the other lamp unit 208 its described.

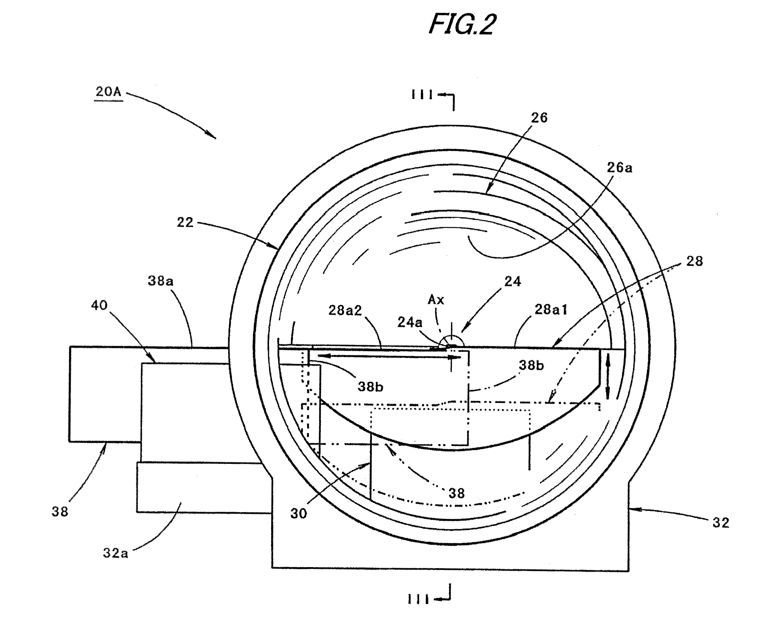

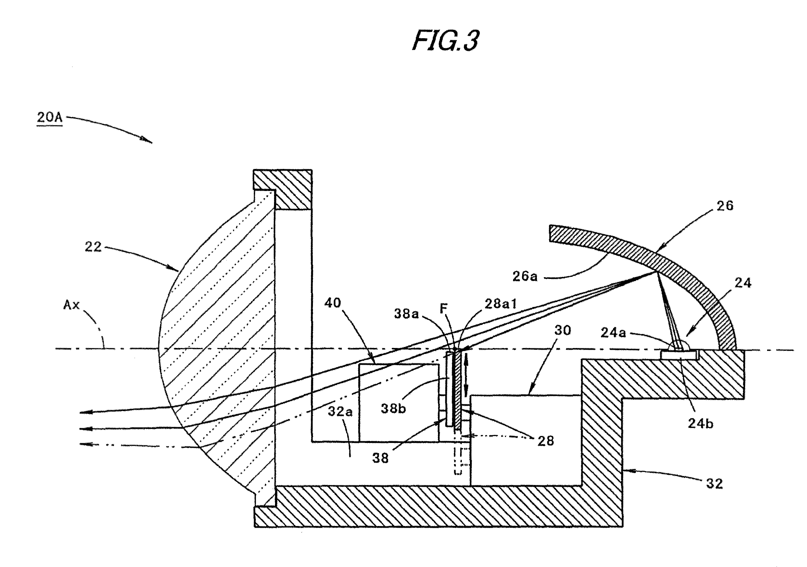

FIG. 2 is a front view showing the detailed configuration of one of the lamp units 20A. FIG. 3 is a sectional view taken on line III-III of FIG. 2.

As shown in these figures, the lamp unit 20A is equipped with a projection lens 22 disposed on the optical axis Ax of the lamp unit extending in the front-rear direction of a vehicle; a light-emitting element 24 disposed behind the rear focal point F of this projection lens 22; a reflector 26 for reflecting the light emitted from this light-emitting element 24 to the projection lens 22 along the optical axis Ax; first and second shade members 28 and 38 for shielding part of the reflected light from this reflector 26 in the vicinity of the rear focal plane of the projection lens 22; first and second actuators 30 and 40 for moving the first and second shade members 28 and 38, and a holder 32.

After the aiming adjustment of the lamp unit 20A is completed, the optical axis Ax thereof is disposed in a state of extending in a direction inclined downward approximately 0.5 to 0.6° with respect to the front-rear direction of the vehicle.

The projection lens 22 is formed of a plane-convex aspheric lens in which the surface on the front side is a convex face and the surface on the rear side is a plane face and is secured to and supported on the holder 32 in a state of being disposed on the optical axis Ax. The projection lens 22 projects an image formed on the rear focal plane thereof (the focal plane containing the rear focal point F of the projection lens 22) on a vertical imaginary screen disposed in front of the lamp unit as a reverted image.

The light-emitting element 24 is a white light-emitting diode in which a light-emitting chip 24a having a rectangular light-emitting face is used as a light source, and the light-emitting chip 24a is supported on a board 24b and the board 24b is secured to and on the holder 32 with the light-emitting or the light-emitting chip 24a directed upward in the vertical direction.

The reflector 26 is disposed so as to cover the light-emitting element 24 from the upper side in a semi-dome shape and secured to and supported on the holder 32 at the lower end edge thereof.

The sectional or the reflecting face 26a of the reflector 26 along the plane containing the optical axis Ax is set to a nearly elliptical shape, and the eccentricity thereof is set so as to increase gradually from the vertical cross-section to the horizontal cross-section thereof. Hence, the light emitted from the light-emitting element 24 and reflected by the reflecting face 26a is nearly converged to a position in the vicinity of the rear focal point F inside the vertical cross-section, and the convergence position inside the horizontal cross-section is displaced to the front side of the rear focal point F.

The first shade member 28 is a plate member disposed along a vertical plane orthogonal to the optical axis Ax and has an upper end edge 28a1, 28a2 including a right section and a left section which are different in height. Furthermore, the first shade member 28 is configured so as to be movable in the up-down direction between its light shielding position indicated by a solid line and its light shield releasing position indicated by a two-dot chain line in FIGS. 2 and 3.

When the first shade member 28 is located at its light shielding position, an upper level section 28a1 in the upper end edge of the first shade member is disposed so as to extend in the horizontal direction from the position of the rear focal point F to the road shoulder side (that is, to the left side (the right side when viewed toward the front of the lamp)), thereby shielding part of the reflected light from the reflector 26. At the time of the shielding, the lower level section 28a2 in the upper end edge of the first shade member 28 is disposed so as to extend obliquely downward from the position of the rear focal point F to the opposite road side and to extend further in the horizontal direction. On the other hand, when the first shade member 28 is located at its light shield releasing position, the upper end edge of the first shade member 28 is disposed at a position apart downward to some extent from the horizontal plane containing the optical axis Ax.

The first actuator 30 is formed of a solenoid and is secured to and supported on the holder 32 behind the first shade member 28 and below the optical axis Ax. Furthermore, the first actuator 30 is configured so as to move the first members 28 between its light shielding position and its light shield releasing position. The first actuator 30 is driven by drive signals input from a controller not shown or by manual switch operation.

The second shade member 38 is formed of a plate member disposed along a vertical plane orthogonal to the optical axis Ax and equipped with an upper end edge 38a extending in the horizontal direction and a side end edge 38b directed to the road shoulder side and extending in the up-down direction. Furthermore, the second shade member 38 is configured so as to be movable in the right-left direction between its light shield releasing position indicated by a solid line in FIG. 2 and a given light shielding position displaced from the light shield releasing position to the road shoulder side. The light shielding position indicated by a two-dot chain line in FIG. 2 is a light shielding position when the side end edge 38b is located slightly on the road shoulder side from the optical axis Ax. The upper end edge 38a of the second shade member 38 is formed to position at approximately the same height as the lower level section 28a2 of the upper end edge of the first shade member 28 when located at its light shielding position.

The second actuator 40 is formed of a stepping motor and is secured to and supported on an extension section 32a extending from the holder 32 to the opposite road side in front of the second shade member 38 and below the optical axis Ax. Furthermore, the second actuator 40 is configured so as to move the second shade member 38 between its light shield releasing position and a given light shielding position displaced from the light shield releasing position to the road shoulder side. The second actuator 40 is driven by drive signals input from a controller not shown or by manual switch operation.

As in FIG. 1, the second shade member 38, the second actuator 40 and the extension section 32a of the holder 32 of the other lamp unit 20B are disposed so as to be bilaterally symmetric with of the lamp unit 20A with respect to the optical axis Ax. However, in the other respects, the configuration of the lamp unit 20B is similar to that of the lamp unit 20A.

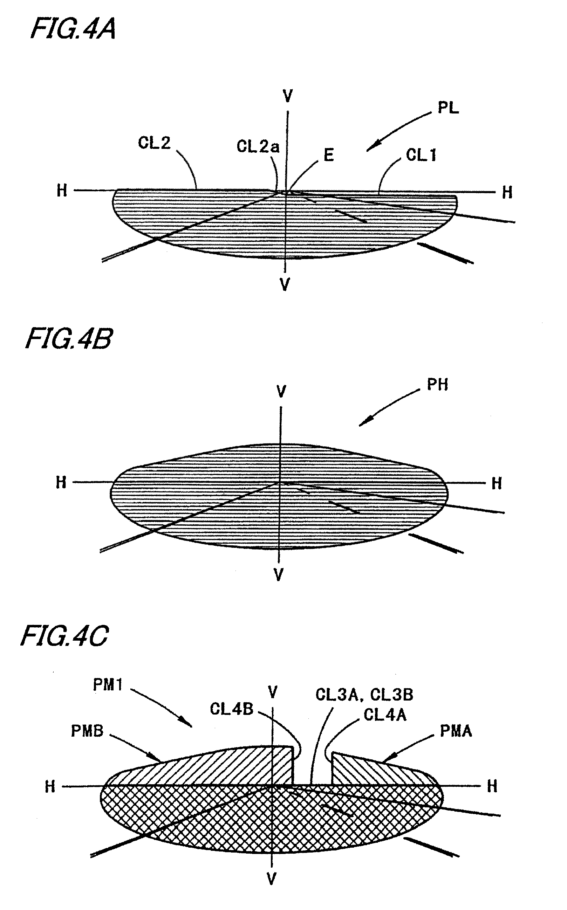

FIGS. 4A to 4F are perspective views showing several types of light distribution patterns formed on an imaginary vertical screen disposed at a position 25 m in front of the lamp units by the light irradiated forward from the vehicle headlamp 10.

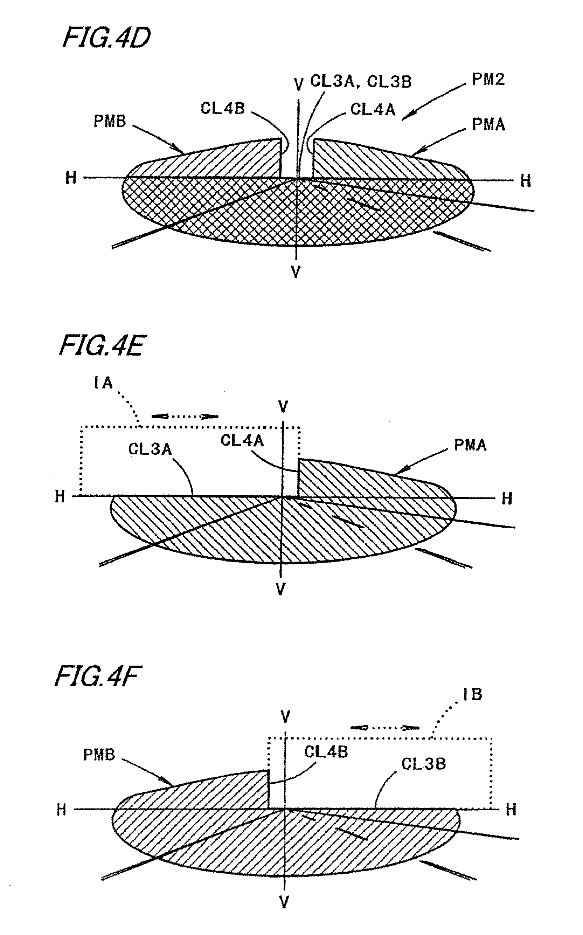

FIG. 4A shows a low-beam light distribution pattern PL for left-side light distribution, FIG. 4B shows a high-beam light distribution pattern PH, and FIGS. 4C and 4D show light distribution patterns PM1 and PM2 serving as patterns intermediate therebetween.

The low-beam light distribution pattern PL shown in FIG. 4A is a light distribution pattern that is formed in a state in which the first shade member 28 is located at its light shielding position and the second shade member 38 is located at its light shield releasing position in each of the lamp units 20A and 20B (in other words, in the state shown in FIG. 2 in the case of the lamp unit 20A).

The upper end edge of the low-beam light distribution pattern PL has a horizontal cut-off line CL1, CL2 with right and left sections which are different in height. The horizontal cut-off line CL1, CL2 extends in the horizontal direction and is formed to have different heights in right and left sides of a boundary on a vertical line V-V passing through H-V, where the H-H line and the V-V line intersect, serving as a vanishing point in the front direction of the lamp. The opposite road side portion on the right side of the line V-V is formed as a horizontal cut-off line section CL1 on the lower level side, and the traveling road side portion on the left side of the line V-V is formed as the horizontal cut-off line section CL2 on the upper level side. At the time, the right end portion of the horizontal cut-off line section CL2 on the upper level side is formed as an oblique cut-off line section CL2a, and this oblique cut-off line CL2a is connected to the horizontal cut-off line section CL1 on the lower level side at the line V-V.

In the low-beam light distribution pattern PL, an elbow point E serving as the intersection point of the horizontal cut-off line section CL1 on the lower level side and the line V-V is located downward approximately 0.5 to 0.6° from H-V. This is attributed to the fact that the optical axis Ax of the vehicle headlamp 10 extends downward approximately 0.5 to 0.6° in the front-rear direction of the vehicle.

The low-beam light distribution pattern PL is formed as the reverted projection image of the light source image formed on the rear focal plane of the projection lens 22 by the light emitted from the light-emitting chip 24a and reflected by the reflector 26. Furthermore, the horizontal cut-off line section CL1 on the lower level side is formed as the reverted projection image of the upper level section 28a1 in the upper end edge of the first shade member 28, and the horizontal cut-off line section CL2 on the upper level side is formed as the reverted projection image of the lower level section 28a2 in the upper end edge of the first shade member 28 approximately along a line H-H passing through the H-V and extending in the horizontal direction. The oblique cut-off line section CL2a at the right end portion of the horizontal cut-off line section CL2 on the upper level side is formed as the reverted projection image of the inclined portion at the end portion of the lower level portion 28a2 on the road shoulder side.

The high-beam light distribution pattern PH shown in FIG. 4B is a light distribution pattern formed in a state in which both the first and second shade members 28 and 38 are at their light shield releasing positions in each of the lamp units 20A and 20B.

The high-beam light distribution pattern PH is formed so as to expand upward to some extent from the horizontal cut-off line CL1, CL2 of the low-beam light distribution pattern PL. This is attributed to the fact that both the first and second shade members 28 and 38 are at their light shield releasing positions and that the reflected light from the reflector 26 thus enters the projection lens 22 directly.

The intermediate light distribution patterns PM1 and PM2 shown in FIGS. 4C and 4D are light distribution patterns formed in a state in which the first shade member 28 is located at its light shield releasing position and the second shade member 38 is located at its light shielding position.

First, the intermediate light distribution pattern PM2 shown in FIG. 4D will be described below.

The intermediate light distribution pattern PM2 is formed as a light distribution pattern obtained by combining the intermediate light distribution pattern PMA shown in FIG. 4E with the intermediate light distribution pattern PMB shown in FIG. 4F.

The light distribution pattern PMA shown in FIG. 4E is a light distribution pattern formed by the irradiated light from the lamp unit 20A when the side end edge 38b of the second shade member 38 is located slightly on the road shoulder side from the optical axis Ax.

The intermediate light distribution pattern PMA has a vertical cut-off line CL4A directed to the road shoulder side and an upward cut-off line CL3A extending in the horizontal direction from the lower end portion of the vertical cut-off line CL4A to the road shoulder side.

In this case, the horizontal cut-off line CL3A is formed so as to extend along the line H-H. This is attributed to the fact that the upper end edge 38a of the second shade member 38 in the lamp unit 20A is formed to be positioned at approximately the same height as the lower level section 28a2 in the upper end edge of the first shade member 28 when is located at its light shielding position. On the other hand, the vertical cut-off line CL4A is formed slightly on the opposite road side from the line V-V. This is attributed to the fact that the side end edge 38b of the second shade member 38 in the lamp unit 20A is located slightly on the road shoulder side from the optical axis Ax.

The oblong rectangular image indicated by a broken line in FIG. 4E is the reverted projection image IA of the second shade member 38.

On the other hand, the intermediate light distribution pattern PMB shown in FIG. 4F is a light distribution pattern formed by the irradiated light from the lamp unit 20B when the side end edge 38b of the second member 38 is located slightly on the opposite road side from the optical axis Ax.

The intermediate light distribution pattern PMB has a shape bilaterally symmetric with the intermediate light distribution pattern PMA with respect to the line V-V. In other words, the intermediate light distribution pattern PMB has a vertical cut-off line CL4B located slightly on the road shoulder side from the line V-V and directed to the opposite road side and an upward cut-off line CL3B extending in the horizontal direction along the line H-H from the lower end portion of the vertical cut-off line CL4B to the opposite road side.

The oblong rectangular image indicated by a broken line in FIG. 4F is the reverted projection image IB of the second shade member 38.

The intermediate light distribution pattern PM2 obtained by combining the intermediate light distribution patterns PMA and PMB is a light distribution pattern in which the vertical cut-off lines CL4A and CL4B used as a pair are formed on the right and left sides of the line V-V, respectively, on the upper side of the line H-H, and the horizontal cut-off line CL3A, CL3B extending nearly along the line H-H overlap with each other therebetween, as shown in FIG. 4D.

Next, the intermediate light distribution pattern PM1 shown in FIG. 4C will be described below.

The intermediate light distribution pattern PM1 is formed as a light distribution pattern obtained by combining the intermediate light distribution pattern PMA formed when the second shade member 38 in the lamp unit 20A is moved from the position shown in FIG. 1 to the road shoulder side so that the side end edge 38b thereof is separated further from the optical axis Ax to the road shoulder side with the intermediate light distribution pattern PMB formed when the second shade member 38 in the lamp unit 20B is moved from the position in FIG. 1 to the road shoulder side so that the side end edge 38b thereof is located slightly on the road shoulder side from the optical axis Ax.

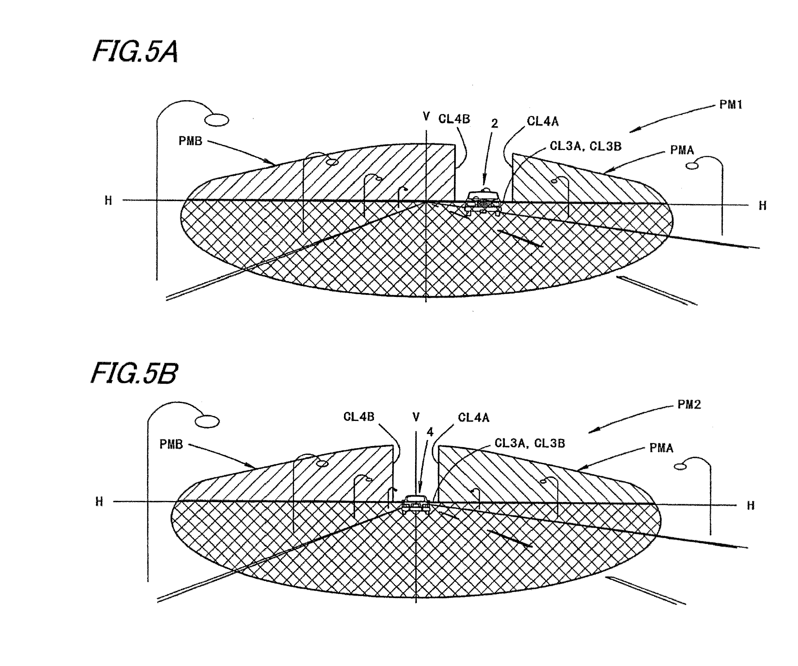

FIGS. 5A and 5B show the details of the intermediate light distribution patterns PM1 and PM2 shown in FIGS. 4C and 4D, respectively.

When the intermediate light distribution pattern PM1 shown in FIG. 5A is formed, even in the case that an oncoming vehicle 2 is approaching, the vertical cut-off lines CL4A and CL4B, used as a pair, are positioned on the right and left sides of the oncoming vehicle 2, respectively. Hence, light can be irradiated to the areas on both the right and left sides of the oncoming vehicle 2 without giving glare to the driver of the oncoming vehicle 2, whereby the visibility of the area ahead of the subject vehicle can be enhanced. At the time, the positions at which the vertical cut-off lines CL4A and CL4B are formed are changed as the oncoming vehicle 2 is approaching, whereby it is possible not to give glare to the driver of the oncoming vehicle 2 regardless of the position of the oncoming vehicle 2.

On the other hand, when the intermediate light distribution pattern PM2 shown in FIG. 5B is formed, even in the case that a preceding vehicle 4 is traveling ahead, the vertical cut-off lines CL4A and CL4B, used as a pair, are positioned on the right and left sides of the preceding vehicle 4, respectively. Hence, light can be irradiated to the areas on both the right and left sides of the preceding vehicle 4 without giving glare to the driver of the preceding vehicle 4, whereby the visibility of the area ahead of the subject vehicle can be enhanced. At the time, the distance between the vertical cut-off lines CL4A and CL4B is changed depending on the distance between the subject vehicle and the preceding vehicle 4, whereby the visibility of the area ahead of the subject vehicle can be enhanced to a maximum extent without giving glare to the driver of the preceding vehicle 4.

As above, the vehicle headlamp 10 of the exemplary embodiment is equipped with the projector lamp units 20A and 20B so as to selectively form the high-beam light distribution pattern PH and the low-beam light distribution pattern PL, wherein the shade of each of the lamp units 20A and 20B is of the first shade member 28 having the upper end edge with the right and the left section which are different in height for forming the horizontal cut-off line CL1, CL2 with the right and left sections which are different in height in the light distribution pattern formed by the irradiated light from the vehicle headlamp 10 and the second shade member 38 having the side end edge 38b for forming the vertical cut-off lines CL4A and CL4B in the light distribution pattern and the upper end edge 38a for forming the upward cut-off line CL3A, CL3B extending in the horizontal direction from the lower end portions of the vertical cut-off lines CL4A and CL4B. Furthermore, the lamp units 20A and 20B are each equipped with the first actuator 30 for moving the first shade member 28 between its light shielding position at which the first shade member 28 is disposed so that the upper end edge 28a1, 28a2 thereof passes through a position in the vicinity of the rear focal point F of the projection lens and its light shield releasing position at which the shielding of the reflected light from the reflector 26 using the first shade member 28 is released and the second actuator 40 for moving the second shade member 38 in the right-left direction. Hence, the following working effects can be obtained.

In other words, the high-beam light distribution pattern PH can be formed by moving the first shade member 28 to its light shield releasing position and by moving the second shade member 38 to a position at which the reflected light from the reflector 26 is not shielded.

On the other hand, the low-beam light distribution pattern PL having the horizontal cut-off line CL1, CL2 with right and left sections which are different in height can be formed by moving the first shade member 28 to its light shielding position. At the time, the movement position of the second shade member 38 may be a given position, provided that the position is within a range in which the light reflected from the reflector 26 and shielded by the first shade member 28 located at its shielding position is not shielded more than necessary.

Furthermore, the light distribution patterns PM1 and PM2 being intermediate between the low-beam light distribution pattern PL and the high-beam light distribution pattern PH and having the vertical cut-off lines CL4A and CL4B and the upward cut-off lines CL3A and CL3B can be formed by moving the first shade member 28 to its light shield releasing position and by moving the second shade member 38 to a position at which part of the reflected light from the reflector 26 is shielded by the second shade member 38.

At the time, the positions at which the vertical cut-off lines CL4A and CL4B are formed can be set at given positions in the right-left direction depending on the position of the second shade member 38 in the intermediate light distribution patterns PM1 and PM2. Hence, the visibility of the area ahead of the subject vehicle can be obtained securely and sufficiently without giving glare to the driver of the oncoming vehicle 2 or the driver of the preceding vehicle 4 by properly setting the positions at which the vertical cut-off lines CL4A and CL4B are formed depending on vehicle traveling circumstances.

According to the structure of the exemplary embodiment, the light distribution patterns PM1 and PM2 which are intermediate between the low-beam light distribution pattern PL and the high-beam light distribution pattern PH can be selectively formed in the vehicle headlamp 10 equipped with the lamp units 20A and 20B that are configured so as to selectively form the high-beam light distribution pattern PH and the low-beam light distribution pattern PL.

In addition, in the vehicle headlamp 10 according to the exemplary embodiment, the second shade member 38 in one of the lamp units, the lamp unit 20A, is configured so that the side end edge 38b thereof forms the vertical cut-off line CL4A directed to the road shoulder side, and the second shade member 38 of the other lamp unit 20B is configured so that the side end edge 38b thereof forms the vertical cut-off line CL4B directed to the opposite road side, whereby it is possible to form the pair of intermediate light distribution patterns PM1 and PM2 in which the directions of the vertical cut-off lines CL4A and CL4B are different from each other. Hence, the vertical cut-off lines CL4A and CL4B can be positioned on both the right and left or the oncoming vehicle 2 or the preceding vehicle 4 by properly setting the positions of the vertical cut-off lines CL4A and CL46 in the pair of the intermediate light distribution patterns PM1 and PM2. As a result, the or the area ahead of the subject vehicle can be obtained securely and sufficiently without giving glare to the driver of the oncoming vehicle. 2 or the driver of the preceding vehicle 4.

Although the above-mentioned embodiment has been described that the vehicle headlamp 10 is equipped with the pair of lamp units 20A and 20B, the vehicle headlamp 10 may be configured so as to be equipped with only one of them. In the case of the configuration, generally speaking, the vehicle headlamps 10, two in number, are used as a pair and disposed on the left and right sides of a vehicle at the front end section thereof. In that case, when the lamp unit 20A is provided on one side and the lamp unit 20B is provided on the other side, working effects approximately similar to those of the above-mentioned embodiment can be obtained as the whole of the vehicle.

Next, modified examples of the embodiment will be described below.

First, a first modified example of the above-mentioned embodiment will be described below.

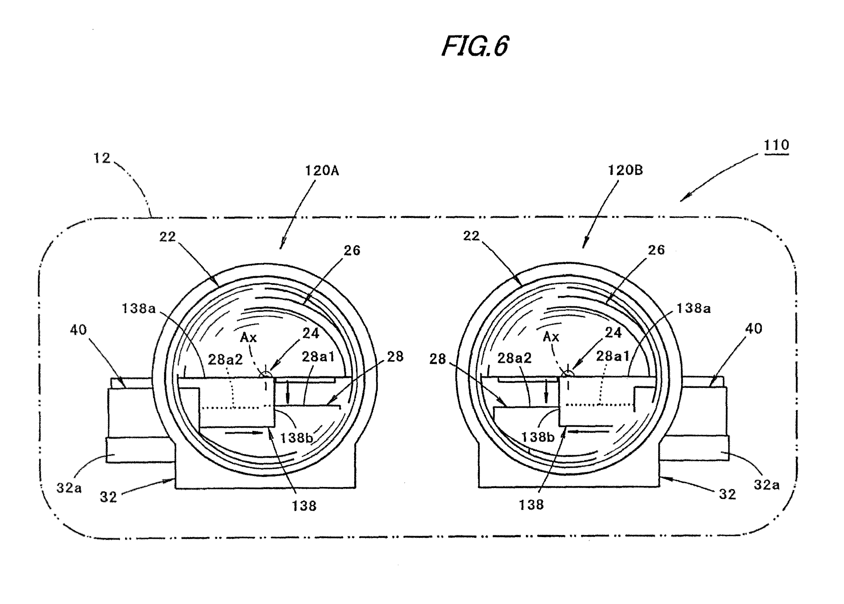

FIG. 6 is a view showing a vehicle headlamp 110 according to the first modified example, approximately similar to FIG. 1.

As shown in FIG. 6, although the basic configuration of the vehicle headlamp 110 according to the first modified example is similar to that of the vehicle headlamp 10 according to the exemplary embodiment, the configuration of a second shade member 138 in each of the pair of lamp units 120A and 120B of the vehicle headlamp 110 is different from that of the second shade member 38 in each of the pair of lamp units 20A and 20B of the above-mentioned exemplary embodiment.

In other words, in the first modified example, the upper end edge 138a of the second shade member 138 in each of the lamp units 120A and 120B is formed so as to extend in the horizontal direction at approximately the same height as the upper level section 28a1 in the upper end edge of the first shade member 28 when is located at its light shielding position (in other worlds, a position approximately at the same height as the optical axis Ax).

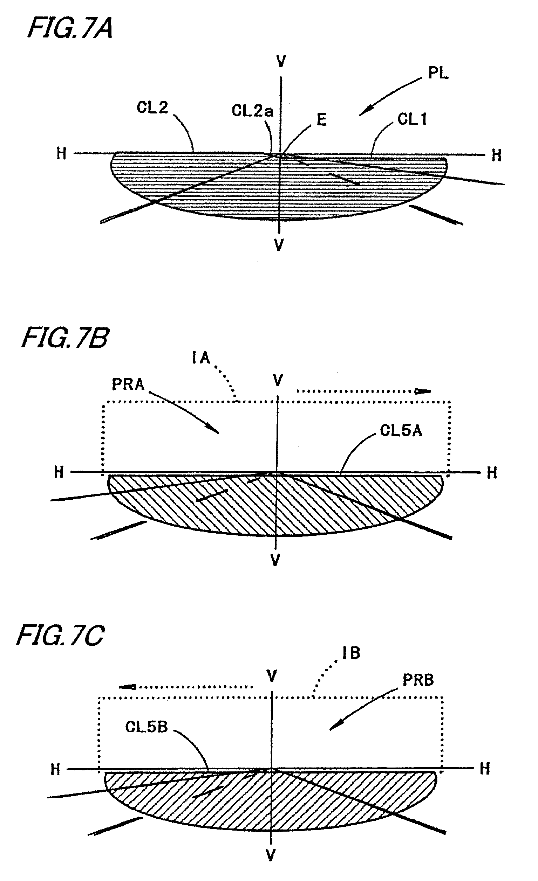

as FIGS. 7A to 7F are views showing the light distribution patterns of the modified example, approximately similar to FIGS. 4A to 4F.

The low-beam light distribution pattern PL shown in FIG. 7A is exactly the same as that shown in FIG. 4A.

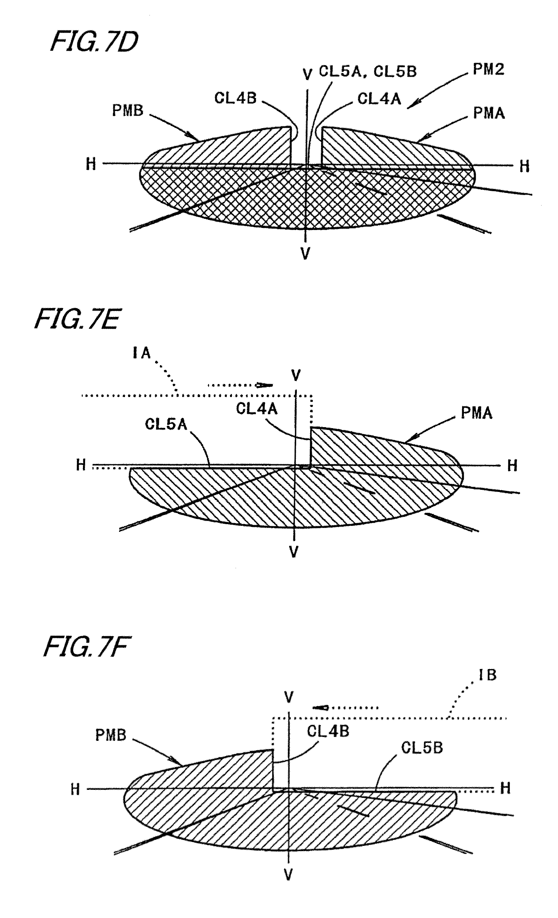

Although the intermediate light distribution pattern PM2 shown in FIG. 7D and the intermediate light distribution patterns PMA and PMB shown in FIGS. 7E and 7F are approximately similar to those shown in FIGS. 4D, 4E and 4F, respectively, the position of the upward cut-off line CL5A, CL5B is not approximately at the same height as the position of the line H-H but set approximately at the same height as the horizontal cut-off line section CL1 on the lower level side. This is attributed to the fact that the position of the upper end edge 138a of the second shade member 138 in each of the lamp units 120A and 120B is set so as to be approximately at the same height as the upper level section 28a1 in the upper end edge of the first shade member 28 when is located at its light shielding position.

The light distribution pattern PRA shown in FIG. 7B is a light distribution pattern that is formed when the second shade member 138 of one of the lamp units, the lamp unit 120A, is moved, from a state in which the intermediate light distribution pattern PMA shown in FIG. 7E is formed by the irradiated light from the lamp unit 120A to a position at which the vertical cut-off line CL4A is not formed, in the opposite direction (that is, to the road shoulder side) of the movement direction that is taken when the high-beam light distribution pattern PH is formed. By the movement of the second shade member 138 at this time, the reverted projection image IA thereof is moved further from the position shown in FIG. 7E indicated by a broken line to the opposite road side.

On the other hand, the light distribution pattern PRB shown in FIG. 7C is a light distribution pattern that is formed when the second shade member 138 of the other lamp unit 120B is moved, from a state in which the intermediate light distribution pattern PMB shown in FIG. 7F is formed by the irradiated light from the other lamp unit 120B to a position at which the vertical cut-off line CL4B is not formed, in the opposite direction (that is, to the opposite road side) of the movement direction that is taken when the high-beam light distribution pattern PH is formed. By the movement of the second shade member 138 at this time, the reverted projection image IB thereof is moved further from the position shown in FIG. 7F indicated by a broken line to the road shoulder side.

The light distribution pattern PRA shown in FIG. 7B is a light distribution pattern having only the upward cut-off line CL5A, and the light distribution pattern PRB shown in FIG. 7C is a light distribution pattern having only the upward cut-off line CL5B.

The upward cut-off lines CL5A and CL5B in the light distribution patterns PRA and PRB are formed so as to be approximately at the same height as the horizontal cut-off line section CL1 on the lower level side in the low-beam light distribution pattern PL. Hence, in the case that the traffic system of a vehicle traveling road is changed from left-hand traffic to right-hand traffic (for example, in the case of passing through the Dover Channel), it is possible not to give glare to the driver of an oncoming vehicle.

Next, a second modified example of the embodiment will be described below.

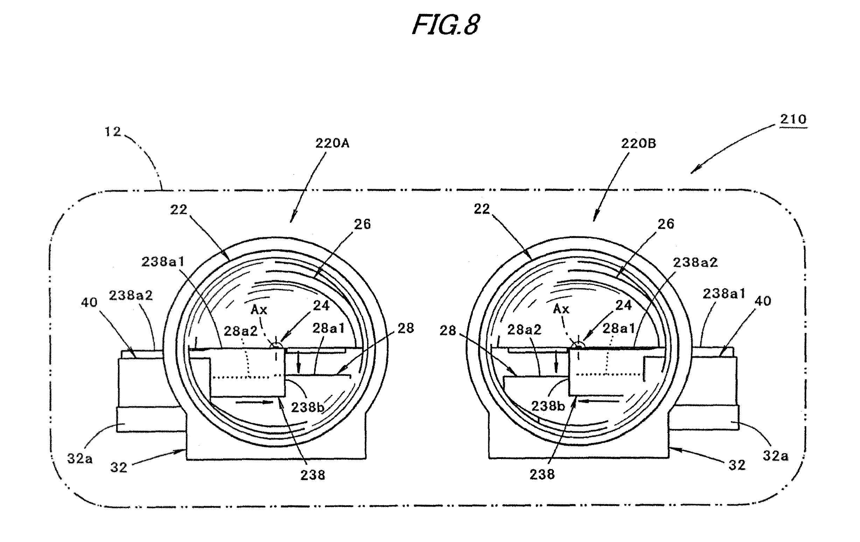

FIG. 8 is a view showing a vehicle headlamp 210 according to the second modified example, similar to FIG. 1.

As shown in FIG. 8, although the basic configuration of the vehicle headlamp 210 according to the second modified example is similar to that of the vehicle headlamp 10 according to the exemplary embodiment, but the configuration of a second shade member 238 in each of a pair of lamp units 220A and 220B of the vehicle headlamp 210 is different from that of the second shade member 38 in each of the pair of lamp units 20A and 20B of the exemplary embodiment.

In other words, in the second modified example, the shape of the upper end edge 238a1, 238a2 of the second shade members 238 in the lamp units 220A and 220B is formed so as to be approximately bilaterally symmetric with the shape of the upper end edge 28a1, 28a2 of the first shade member 28 that is located at its light shielding position.

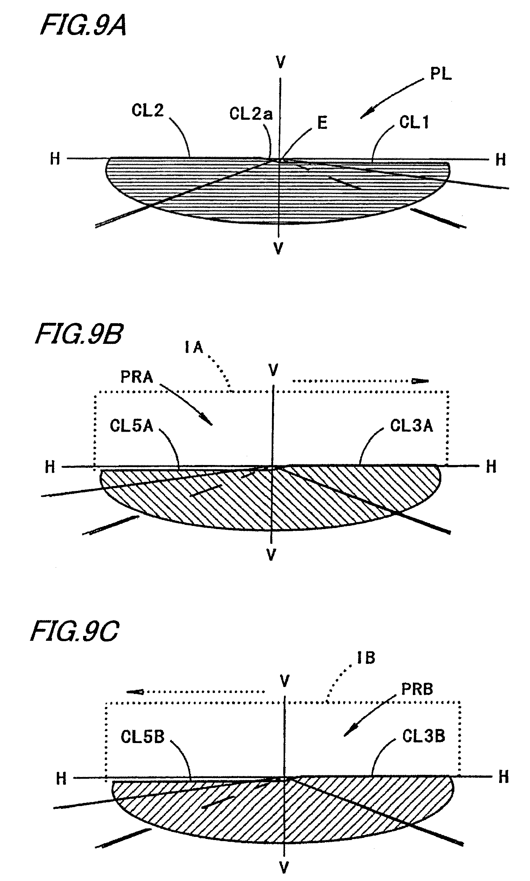

FIGS. 9A to 9F are views showing the light distribution patterns of the second modified example, approximately similar to FIGS. 4A to 4F, respectively.

The low-beam light distribution pattern PL shown in FIG. 9A is exactly the same as that shown in FIG. 4A.

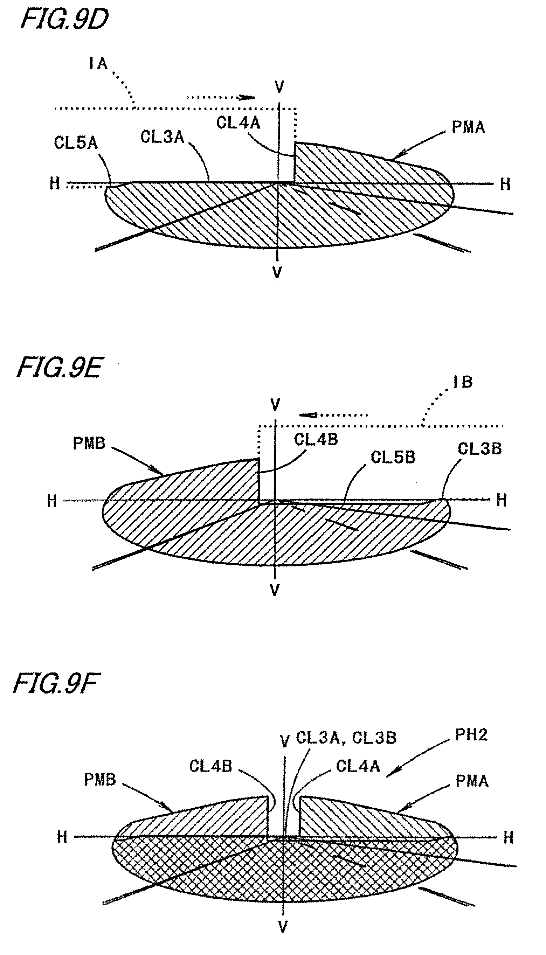

Although the intermediate light distribution pattern PM2 shown in FIG. 9D and the intermediate light distribution patterns PMA and PMB shown in FIGS. 9E and 9F are approximately similar to those shown in FIGS. 4D, 4E and 4F, respectively, the position of the upward cut-off line CL5B in one of the intermediate light distribution patterns, the intermediate light distribution pattern B, is not approximately at the same height as the position of the line H-H but approximately at the same height as the position of the horizontal cut-off line section CL1 on the lower level side. This is attributed to the fact that the shape of the upper end edge 238a1, 238a2 of the second shade member 238 in each of the lamp units 220A and 220B is formed so as to be approximately bilaterally symmetric with the shape of the upper end edge 28a1, 28a2 of the first shade member 28 that is located at its light shielding position. Furthermore, the end section of the upward cut-off line CL3A in the intermediate light distribution pattern PMA shown in FIG. 9E is lowered one step and the end section of the upward cut-off line CL5B in the intermediate light distribution PM2 shown in FIG. 9F is raised one step of a reason to that described above.

The light distribution pattern PRA shown in FIG. 9B is a light distribution pattern that is formed when the second shade member 238 of one of the lamp units, the lamp unit 220A, is moved, from a state in which the intermediate light distribution pattern PMA shown in FIG. 9E is formed by the irradiated light from the lamp unit 220A to a position at which the vertical cut-off line CL4A is not formed, in the opposite direction (that is, to the road shoulder side) of the movement direction that is taken when the high-beam light distribution pattern PH is formed. By the movement of the second shade member 238 at this time, the reverted projection image IA thereof is moved further from the position shown in FIG. 9E indicated by a broken line to the opposite road side.

On the other hand, the light distribution pattern PRB shown in FIG. 9C is a light distribution pattern that is formed when the second shade member 238 of the other lamp unit 220B is moved, from a state in which the intermediate light distribution pattern PMB shown in FIG. 9F is formed by the irradiated light from the other lamp unit 220B to a position at which the vertical cut-off line CL4B is not formed, in the opposite direction (that is, to the opposite road side) of the movement direction that is taken when the high-beam light distribution pattern PH is formed. By the movement of the second shade member 238 at this time, the reverted projection image IB thereof is moved further from the position shown in FIG. 9F indicated by a broken line to the road shoulder side.

The light distribution pattern PLEA shown in FIG. 9B is a light distribution pattern having a horizontal cut-off line CL5A, CL3A with right and left sections which are different in height, wherein the shape of the horizontal cut-off line CL5A, CL3A is bilaterally symmetric with the shape of the horizontal cut-off line CLI, CL2 with right and left sections which are different in height in the low-beam light distribution pattern PL. On the other hand, the light distribution pattern PRB shown in FIG. 9C is a light distribution pattern having a horizontal cut-off line CL5B, CL3B with right and left sections which are different in height, wherein the shape of the horizontal cut-off line CL5B, CL3B is bilaterally symmetric with the shape of the horizontal cut-off line CL1, CL2 with right and left which are different in height in the low-beam light distribution pattern PL.

Hence, the light distribution patterns PRA and PRB are formed, even in the case that the traffic system of a vehicle traveling road is changed from left-hand traffic to right-hand traffic, light can be irradiated according to the light distribution pattern PPA or PRB having a shape approximately similar to the shape of the low-beam light distribution pattern corresponding to the traffic system. As a result, the visibility of the area ahead of the subject can be obtained securely without giving glare to the driver of the oncoming vehicle 2.

In the above-mentioned exemplary embodiment and the respective modified examples, it has been described that the light-emitting chip 24a of the light-emitting element 24 is used as a light source. However, even in the case that the light-emitting section of a discharge bulb, the filament of a halogen bulb or the like is used as a light source, similar working effects can be obtained.

The numeric values indicated as data in the above-mentioned embodiment and the modified examples are only examples and may be set to different values as necessary as a matter of course.

### [Description of Reference Numerals and Signs]

2 oncoming vehicle
4 preceding vehicle
10, 110, 210 vehicle headlamp
12 lamp body
20A, 120A, 220A one of lamp units
20B, 120B, 220B the other lamp unit
22 projection lens
24 light-emitting element
24a light-emitting chip
24b board
26 reflector
26a reflecting face
28 first member
28a1 upper end edge (upper level section)
28a2 upper end edge (lower level section)
30 first actuator
32 holder
32a extension section
38, 138, 238 second shade member
38a,138a, 238a1, 238a2 upper end edge
38b, 138b, 238b side end edge
40 second actuator
Ax optical axis
CL1 horizontal cut-off line section on lower level side
CL2 horizontal cut-off line section on upper level side
CL2A oblique cut-off line
CL3A, CL3B, CL5A, CL5B upper cut-off line
CL4A, CL4B vertical cut-off line
E elbow point
F rear focal point
IA, IB reverted projection image
PH high-beam light distribution pattern
PL low-beam light distribution pattern
PM1, PM2, PMA, PMB intermediate light distribution pattern
PRA, PRB light distribution pattern

## Claims

1. A vehicle headlamp (10, 110, 210) comprising:
a projection lens (22) to be disposed on an optical axis (Ax) extending along a front-rear direction of a vehicle; along a front-rear of a vehicle;
a light source (24) disposed in a rear side of a rear focal point (F) of the projection tens (22);
a reflector (26) for reflecting light from the light source (24) toward the projection lens (22);
a shade (28, 38, 138, 238) for shielding a part of the reflected light from the reflector (26) and which is disposed in a vicinity of a rear focal plane of the projection lens (22), the vehicle headlamp being **characterized in that** the shade includes: a first shade member (28) having an upper end edge (28a1, 28a2) for forming a horizontal cut-off line (CL1, CL2) in a light distribution pattern; and a second shade member (38, 138, 238) having a side end edge (38b, 138b, 238b) for forming a vertical cut-off line (CL4A, CL4B) in the light distribution pattern and an upper end edge (38a, 138a, 238a1, 238a2) for forming an upward cut-off line (CL3A, CL3B, CL5A, CL5B) extending in an approximately horizontal direction from a lower end portion of the vertical cut-off line (CL4A, CL4B); and **in that** it further includes
a first actuator (30) for moving the first shade member (28) between a light shielding position at which the first shade member (28) is disposed so that the upper end edge (28a1, 28a2) passes through a position in the vicinity of the rear focal point (F) and a light shield releasing position at which a shielding of the light by the first shade member (28) is released; and
a second actuator (40) for moving the second shade member (38, 138, 238) in a right-left direction.

2. The vehicle headlamp (10) according to claim 1, wherein the upper end edge of the first shade member (28) includes an upper level section (28a1) in one side of the and left sides and a lower level section (28a2) in the other side of the right and left sides, wherein the upper level section (28a1) is positioned in an upper side in respect to the lower level section (28a2), and
wherein the upper end edge (38a) of the second shade member (38) extends in the horizontal direction at approximately the same height as the lower level section (28a2) of the first shade member (28), when the first shade member (28) is located at the light shielding position.

3. The vehicle headlamp (110) according to claim 1, wherein the upper end edge of the first shade member (28) includes an upper level section (28a1) in one side of the right and left sides and a lower level section (28a2) in the other side of the right and left sides, wherein the upper level section (28a1) is positioned in an upper side in respect to the lower level section (28a2), and
wherein the upper end edge (138a) of the second shade member (138) extends in the horizontal direction at approximately the same height as the upper level section (28a1) of the first shade member (28), when the first shade member (28) is located at the light shielding position.

4. The vehicle headlamp (210) according to claim 1, wherein the upper end edge of the first shade member (28) includes an upper level section (28a1) in one side the right and left sides and a lower level section (28a2) in the other side the right and left sides, wherein the upper level section (28a1) is positioned in an upper side in respect to the lower level section (28a2),
wherein a shape of the upper end edge (238a) of the second shade member (238) is formed to be approximately bilaterally symmetric with a shape of the upper end edge (28a1, 28a2) of the first shade member (28).

5. The vehicle headlamp according to any one of claims 1 to 4, wherein the vehicle headlamp (10, 110, 210) comprises a pair of lamp units (20A, 120A, 220A, 20B, 120B, 220B), and of the lamp units indudes said having said first shade member (28) and said second member (38, 138, 238),
wherein the second shade member (38, 138, 238) of one lamp of the lamp units (20A, 120A, 220A) is configured so that the side end edge (38b, 138b, 238b) forms a vertical cut-off line directed to a road shoulder and
wherein the second shade member (38, 138, 238) of the other lamp oaf the lamp units (20B, 120B, 2208) is configured so that the side end edge (38b, 138b, 238b) forms a cut-off line directed to an opposite road side.
